# EUROPÄISCHE PATENTSCHRIFT

(11) **EP 1 043 919 B1**
(45) Veröffentlichungstag und Bekanntmachung des Hinweises auf die Patenterteilung: **24.01.2007**
(21) Anmeldenummer: 00107206.5
(22) Anmeldetag: 01.04.2000
(51) Int. Cl.: H05B 41/288, H05B 41/392, H05B 41/38

(54) **Vorschaltgerät für eine Hochdruckgasentladungslampe in einem Kraftfahrzeug**
Ballast for a high pressure discharge lamp in a vehicle
Ballast pour une lampe à décharge haute pression dans un véhicule

(30) Priorität: 08.04.1999 DE 19915795
(43) Veröffentlichungstag der Anmeldung: 11.10.2000
(73) Patentinhaber: Hella KGaA Hueck & Co., 59552 Lippstadt (DE)
(72) Erfinder: Daub, Wolfgang, 59609 Anröchte (DE); Radtke, Volker, 33330 Gütersloh (DE)

(56) Entgegenhaltungen:
- DE-A- 4 331 952
- DE-A- 19 622 807

## Beschreibung

Die Erfindung betrifft ein Vorschaltgerät für eine Hochdruckgasentladungslampe in einem Kraftfahrzeug gemäß des Oberbegriffs des Anspruchs1.

Ein solches Vorschaltgerät sollte idealerweise folgenden Anforderungen genügen:
Es sollte
1. in einem weiten Betriebsspannungsbereich die Lampe zuverlässig und schnell starten,
2. bei Über- und Unterspannung in einen stabilen Notlauf übergehen,
3. einen hohen elektrischen Wirkungsgrad aufweisen,
4. wenig elektrische Störungen aussenden,
5. möglichst kleinbauend sein und
6. kostengünstig sein.

Ein Vorschaltgerät mit einem pulsweitenmoduliertem Schaltregler ist aus der DE 43 31 952 A1 bekannt. Hierbei wird der primärseitige Wandlerschalter von einem Taktgeber regelmäßig eingeschaltet. Das Abschalten des Wandlerschalters erfolgt jeweils, wenn der Primärstrom einen von einem Begrenzer vorgegebenen Sollwert erreicht, wobei der Sollwert für den Primärstrom in Abhängigkeit von der Lampenleistung geregelt wird. Weiterhin gibt eine Steuereinrichtung während der Lampenanlaufphase einen erhöhten Lampenleistungssollwert vor und bewirkt zudem, daß der Begrenzer während der Anlaufphase einen höheren Primärstromsollwert zuläßt.

Dieser Schaltregler ist hinsichtlich der Leistungsübertragung vom Primär- zum Sekundärkreis, und damit auch hinsichtlich seines elektrischen Wirkungsgrades nicht optimal, da er mit einer festen Frequenz betrieben wird.

Eine bezüglich des elektrischen Wirkungsgrades weit vorteilhaftere Ansteuerung des Schaltreglers erfordert eine Taktung mit einer variablen Periodendauer. Im stationären Betrieb wird der Wirkungsgrad optimal, wenn das Einschalten des Wandlerschalters genau dann erfolgt, wenn die im Wandlertransformator gespeicherte Energie in den Ausgang übertragen wurde ("Lückbetrieb"). Allerdings ist die im Lückbetrieb zu übertragende Leistung begrenzt.

Da diese für den erhöhten Leistungsbedarfs in der Anlaufphase der Hochdruckgasentladungslampe wegen der angestrebten möglichst leistungsarmen Dimensionierung des Schaltreglers im allgemeinen nicht ausreicht, muß während der Anlaufphase auch ein Betrieb des Schaltreglers außerhalb des Lückbetriebs ("Trapezbetrieb") möglich sein.

Es ist die Aufgabe der Erfindung, ein möglichst einfaches, kleinbauendes und kostengünstiges Vorschaltgerät für eine Hochdruckgasentladungslampe in einem Kraftfahrzeug zu schaffen, welches den Gleichspannungswandler in allen Betriebszuständen der Hochdruckgasentladungslampe in der optimalen Betriebsart und mit der optimalen Frequenz betreibt.

Diese Aufgabe wird durch die kennzeichnenden Merkmale des Anspruchs 1 gelöst.

Die erfindungsgemäße Ausgestaltung des Pulsweitenmodulators ermöglicht einen gleitenden Übergang zwischen den verschiedenen Betriebsarten des Schaltwandlers in Abhängigkeit vom Leistungsbedarf der Hochdruckgasentladungslampe.

Hierbei ist vorteilhaft, daß die Erfassung der Lückgrenze durch Erfassung der Spannungsänderung an der Diode mittels eines Differentiators erfolgt. Diese Lösung ist sehr kostengünstig und auch bei sehr schnell getakteten Schaltreglern praktikabel, während eine Erfassung der Diodenspannung mittels eines Komparators bei hohen Taktfrequenzen einen besonders schnellen und damit kostenaufwendigen Komparator erfordern würde.

Die bei diesem Vorschaltgerät mögliche besonders hochfrequente Taktung (Größenordnung 1 MHz) des Schaltreglers verbessert zudem dessen Wirkungsgrad und ermöglicht die Verwendung eines besonders kleinbauenden Wandlertransformators.

Im folgenden soll Aufbau und Funktionsweise des erfindungsgemäßen Vorschaltgerätes anhand eines in der Zeichnung dargestellten Ausführungsbeispiels näher erläutert werden.

Es zeigen
- Figur 1: das Blockschaltbild eines erfindungsgemäßen Vorschaltgerätes,
- Figur 2: den Aufbau des pegelgesteuerten Flip-Flops FF,
- Figur 3: den Aufbau des zeitgesteuerten Setz-Rücksetzgenerators A,
- Figur 4: den Aufbau des Rücksetzgenerators B,

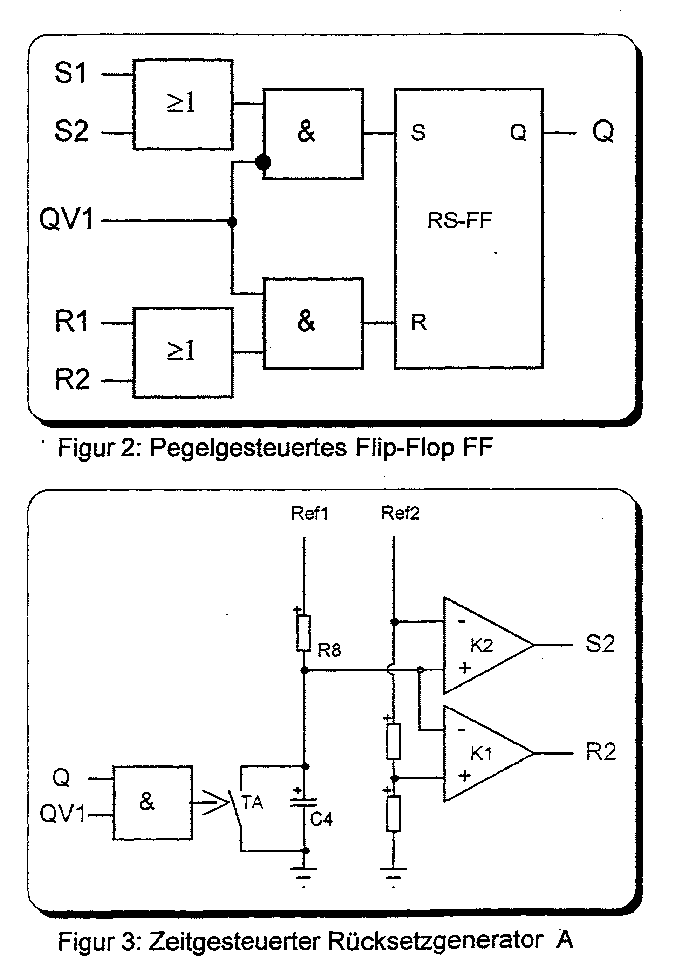

- Figur 3: den Aufbau des Setzgenerators C.

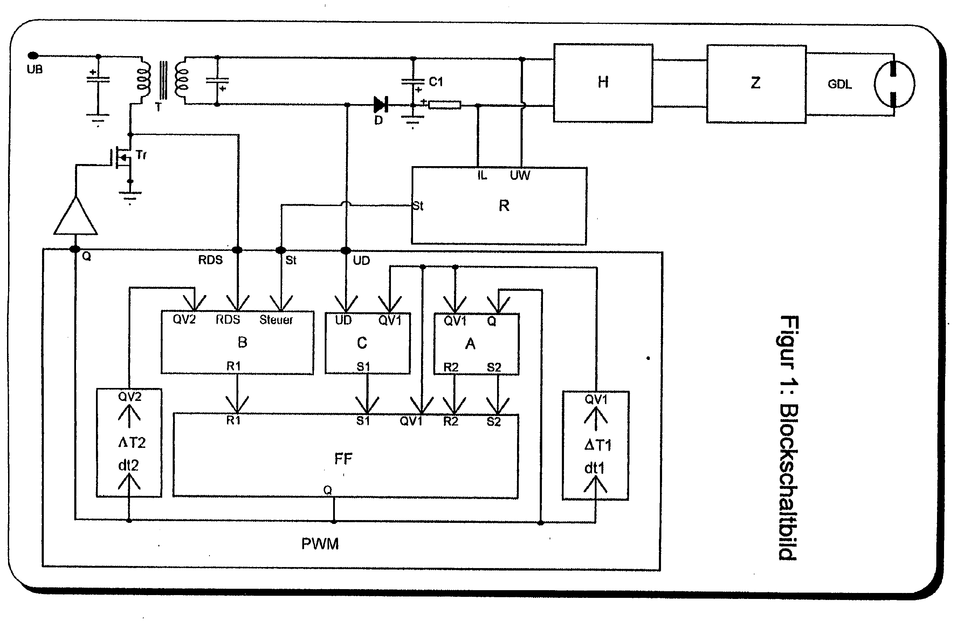

### Figur 1: Blockschaltbild des Vorschaltgerätes

Das Vorschaltgerät weist einen Gleichspannungssperrwandler auf, dessen Ausgangsspannung über eine H-Brückenschaltung H wechselgerichtet einer Hochdruckgasentladungslampe GDL zugeführt wird. Die zum Zünden erforderliche Hochspannung erzeugt eine zwischen H-Brückenschaltung H und Hochdruckgasentladungslampe GDL geschaltete Überlagerungszündschaltung Z.

Der Gleichspannungssperrwandler, der vorteilhafterweise auch als CUK-Wandler ausgeführt sein kann, besteht aus einem Wandlertransformator T, einem primärseitigen Wandlerschalter (Schalttransistor) Tr, einer sekundärseitigen Gleichrichterschaltung C1, D und einer Steuerelektronik (R, PWM).

Die Steuerelektronik (R, PWM) besteht aus einem Regler R, dessen Ausgangsgröße St eine Funktion von Lampenstrom IL und Lampenspannung UW darstellt, sowie einem als gemischte Analog-Digitalschaltung ausgeführten Pulsweitenmodulator PWM.
Der Pulweitenmodulator PWM besteht aus einem pegelgesteuerten Flip-Flop FF, dessen Ausgang das PWM-Signal Q liefert; einem Setzgenerator C, der das Flip-Flop FF setzt, wenn der Wandlertransformator T seine Energie übertragen hat; einem Rücksetzgenerator B, der das Flip-Flop FF zurücksetzt, wenn der Primärstrom des Wandlertransformators T einen vorgegebenen Wert St überschreitet; aus einem zeitgesteuerten Setz-Rücksetzgenerator A, der die Periodendauer und das Puls-Pausen-Verhältnis des PWM-Signals Q begrenzt, sowie aus zwei Signalverzögerungsgliedern dt1, dt2, welche aus dem PWM-Signal Q ein erstes zeitverzögertes Signal QV1 und ein zweites zeitverzögertes Signal QV2 erzeugen.

Die genannten Baugruppen sind so verschaltet, daß das erste zeitverzögerte Signal QV1 die Setzeingänge S1 und S2 des Flip-Flops FF sperrt und die Rücksetzeingänge R1 und R2 des Flip-Flops FF freigibt; daß das erste zeitverzögerte Signal QV1 und das PWM-Signal Q AND-verknüpft die Zeitsteuerung des Setz-Rücksetzgenerators A initialisieren, daß der Setzgenerator C ein Signal am Setzeingang S1 des Flip-Flops FF erzeugt, indem er die an der Diode D anliegende Spannung UD differenziert, den Pegel des differenzierten Signals in ein digitales Signal umwandelt und dessen Wert mit einem RS-Flip-Flop RS-FF1 speichert, dessen Ausgangsignal das Signal für den Setzeingang S1 des Flip-Flops FF ist; daß das erste zeitverzögerte Signal QV1 das RS-Flip-Flop RS-FF1 im Setzgenerator C zurücksetzt und den Setzeingang S des RS-Flip-Flops RS-FF1 sperrt, und daß das zweite zeitverzögerte Signal QV2 und das PWM-Signal Q NAND-verknüpft die Erfassung des primären Wandlerstroms im Rücksetzgenerator B aktivieren.

Der Pulsweitenmodulator kann den Gleichspannungssperrwandler mit gleitendem Übergang zwischen den beiden sinnvollen Betriebsarten "Lückbetrieb" und "Trapezbetrieb" betreiben:

Der Lückbetrieb nahe der Lückgrenze mit variabler Periodendauer ist die Nennbetriebsart des Gleichspannungssperrwandlers. Sie wird ausgeführt, wenn die Betriebsspannung des Gleichspannungssperrwandlers ausreichend hoch ist und die Lampenleistung auf ihren Nennwert zurückgeregelt wurde. Der Lückbetrieb nahe der Lückgrenze zeichnet sich dadurch aus, daß der Wandlerschalter Tr immer dann eingeschaltet wird, wenn die Diode D vom leitenden in den gesperrten Zustand übergeht. Zu diesem Zeitpunkt ist die gesamte im Wandlertransformator T gespeicherte Energie in den Ausgang übertragen worden und der Wandlerschalter Tr kann im strom- und spannungsfreien Zustand eingeschaltet werden. Abgeschaltet wird der Wandlerschalter Tr dann, wenn der Strom durch den Wandlerschalter Tr einen vom Regler R vorgegebenen Ausgangsgröße St überschreitet. In dieser Betriebsart erfolgt die Pulsweitenmodulation durch Variation der Periodendauer. Die Periodendauer wächst bei sinkender Betriebsspannung UB oder sinkender Lampenspannung UW oder bei steigender Lampenleistung.

In der Anlaufphase der Lampe sind im allgemeinen die Lampenspannung UW sehr viel niedriger und der Lampenstrom IL sowie die Lampenleistung sehr viel höher als im stationären Betrieb. Beim Lückbetrieb des Wandlers würde wegen der sehr viel längeren Übertragungsdauer der im Transformator T gespeicherten Energie in den Sekundärkreis die Periodendauer unzulässig anwachsen und die geforderte Leistung könnte nicht mehr übertragen werden. Es ist erforderlich die Periodendauer auf einen maximalen Wert zu begrenzen, damit der Wandler vom Lückbetrieb in den Trapezbetrieb übergehen kann. Da jetzt innerhalb einer Periode nur noch ein Teil der im Wandlertransformator T gespeicherten Energie übertragen wird, kann kein Einschaltsignal aus dem Verlauf der Diodenspannung abgeleitet werden. Der Wandlerschalter Tr wird nach Erreichen einer Zeit, die der maximalen Periodendauer entspricht, zwangseingeschaltet. Es muß jedoch sichergestellt sein, daß zu diesem Zeitpunkt der Wandlerschalter Tr bereits für eine Mindestzeit abgeschaltet war. Die maximale Einschaltzeit bestimmt mit der maximalen Periodendauer das maximale Puls-Pausen-Verhältnis in dieser Betriebsart.

### Figur 2: Pegelgesteuertes Flip-Flop FF

Das "Herzstück" des Pulsweitenmodulators ist ein RS-Flip-Flop RS-FF, dessen Ausgang Q über einen Treiber das Gate des Wandlerschalter Tr steuert. Die beiden OR-verknüpften Setzeingänge S1, S2 werden mit dem invertierten ersten zeitverzögerten Ausgangssignal QV1 AND-verknüpft. Signale an den Setzeingängen S1 und/oder S2 werden daher erst nach einer ersten Verzögerungszeit ΔT1, nachdem der Ausgang Q logisch LOW geworden ist, das RS-Flip-Flop RS-FF neu setzen können.

Ebenso werden die beiden OR-verknüpften Rücksetzeingänge R1, R2 mit dem ersten zeitverzögerten Ausgangssignal QV1 AND-verknüpft. Signale an den Rücksetzeingängen R1 und/oder R2 werden daher erst nach der ersten Verzögerungszeit ΔT1 nachdem der Ausgang Q logisch HIGH geworden ist, das RS-Flip-Flop RS-FF zurücksetzen können.

### Figur 3: Zeitgesteuerter Setz-Rücksetzgenerator A

Da die Setz- und Rücksetzsignale aus analogen Größen gewonnen werden und diese, bezogen auf eine digitale Weiterverarbeitung, während der Schaltübergänge Tr-ein nach Tr-aus bzw. D-ein nach D-aus nicht definierte Zustände annehmen können, wird nach einem Schaltübergang des Wandlerschalters Tr oder der Diode D ein Zurückschalten für die Dauer der ersten Verzögerungszeit ΔT1 unterdrückt. Die erste Verzögerungszeit ΔT1 ist so gewählt, daß sich die Setz- und Rücksetzsignale im eingeschwungenen Zustand befinden.

Die Signale für den Rücksetzeingang R2 des pegelgesteuerten Flip-Flops FF, welche die maximale Einschaltzeit des Wandlerschalters Tr bestimmen, sowie für dessen Setzeingang S2, welche die maximale Periodendauer festlegen, werden aus dem Spannungsverlauf am Kondensator C4 mit Hilfe zweier Komparatoren K1, K2 abgeleitet. Der Kondensator C4 wird über einen Widerstand R8 mit definierter Zeitkonstante aufgeladen und, wenn das PWM-Signal Q am Ausgang des RS-Flip-Flops RS-FF HIGH wird, über den steuerbaren Schalter TA in der Zeit ΔT1 entladen. Der steuerbare Schalter TA wird hierzu mit den AND-verknüpften Signalen Q und QV1 gesteuert. Die maximale Einschaltzeit des Wandlerschalters Tr ist die Summe aus der Ladezeit des Kondensators C4, bis die Schwelle des Komparators K1 erreicht ist und der ersten Verzögerungszeit ΔT1. Die maximale Periodendauer ist die Summe aus der Ladezeit des Kondensators C4, bis die Schwelle des Komparators K2 erreicht ist und der ersten Verzögerungszeit ΔT1. Die Schaltschwellen der Komparatoren K1 und K2 sind hierbei durch die Referenzspannungen Ref1 und Ref2 festgelegt.

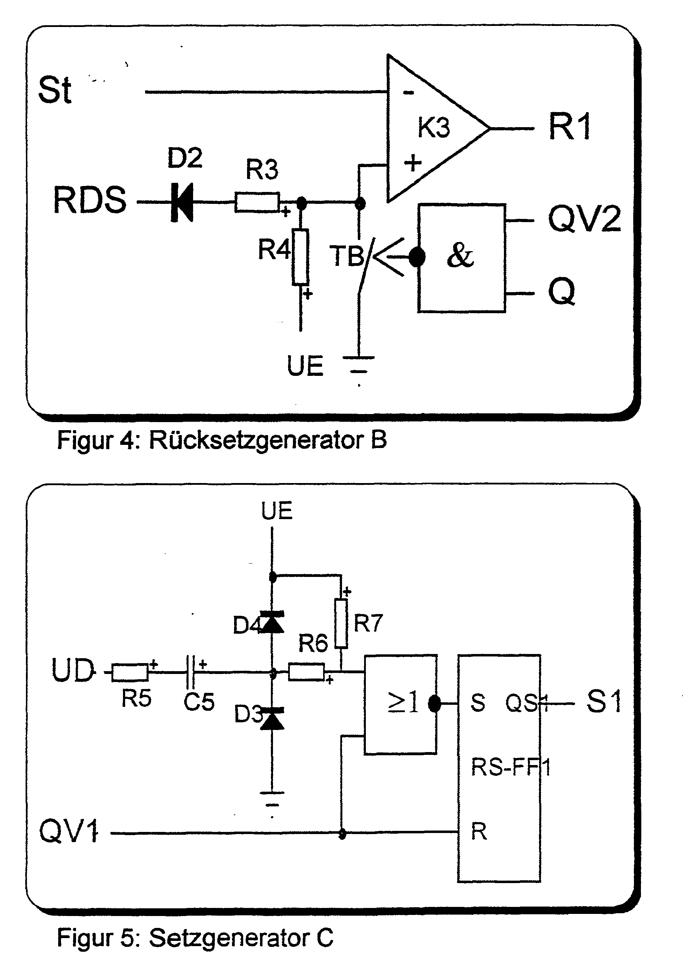

### Figur 4: Rücksetzgenerator B

Wenn der Wandlerschalter Tr eingeschaltet ist, steigt der Primärstrom des Gleichspannungssperrwandlers rampenförmig an und der Wandlerschalter Tr wird bei einem definierten Stromwert abgeschaltet, wenn nicht zuvor die Einschaltzeitbegrenzung zum Abschalten geführt hat. Der Primärstrom wird über den Widerstand RDS des Wandlerschalters Tr erfaßt, und, über die Diode D2 und den Widerstand R3 entkoppelt, dem Komparator K3 zugeführt. Wird das Signal größer als die vom Regler R vorgegebene Ausgangsgröße St, so erzeugt der Komparator K3 an seinem Ausgang das Rücksetzsignal für das pegelgesteuerte Flip-Flop FF. Der Strom aus dem hochohmigen Widerstand R4, welcher an der Versorgungsspannung UE des Pulsweitenmodulators PWM anliegt, erzeugt an der Diode D2 und dem Widerstand R3 einen Spannungsabfall, der sich zum primärstromabhängigen Spannungsabfall am Widerstand RDS des Wandlerschalters Tr addiert. Die temperaturabhängige Flußspannung der Diode D2 kompensiert den Temperaturverlauf von RDS in der Weise, daß die verbleibende Temperaturabhängigkeit reziprokproportional zum Temperaturverlauf des Sättigungsstroms des Wandlertransformators T ist. Im gesperrten Zustand des Wandlerschalters Tr ist dessen Drainspannung sehr hoch und die Diode D2 wird gesperrt. Gleichzeitig wird der Pluseingang des Komparators K3 über den steuerbaren Schalter TB kurzgeschlossen. Der steuerbare Schalter TB ist immer dann durchgeschaltet, wenn das pegelgesteuerte Flip-Flop FF rückgesetzt ist und darüberhinaus noch für die Dauer der zweiten Verzögerungszeit nach dem Setzen des pegelgesteuerte Flip-Flops FF. Die zweite Verzögerungszeit ΔT2 ist kürzer als die erste Verzögerungszeit ΔT1 und stellt damit sicher, daß der Ausgang des Komparators K3 im eingeschwungenen Zustand ist, wenn der Rücksetzeingang R1 des pegelgesteuerten Flip-Flops FF nach der ersten Verzögerungszeit ΔT1 freigegeben wird.

### Figur 5: Setzgenerator C

Wenn der Wandlerschalter Tr abgeschaltet wird, beginnt die Übertragung der im Wandlertransformator T gespeicherten Energie in den Ausgangskondensator C1 sowie in die Last, d.h. in das Zündgerät Z und in die Hochdruckgasentladungslampe GDL. Im lückenden Betrieb nahe der Lückgrenze wird die gesamte Energie übertragen, bis die Diode D gesperrt wird. Der negative Spannungssprung an der Anode der Diode D wird durch den Setzgenerator C mittels Widerstand R5 und Kondensator C5 differenziert, durch die Dioden D3 und D4 begrenzt, und über die Widerstände R6 und R7 HIGH-normiert. Dann wird er über ein NOR-Gatter invertiert und dem Setzeingang S des RS-Flip-Flops RS-FF1 zugeführt. DerAusgang des RS-Flip-Flops RS-FF1 ist mit dem Setzeingang S1 des pegelgesteuerten Flip-Flops FF verbunden. Das RS-Flip-Flop RS-FF1 des Setzgenerators C wird durch das erste zeitverzögerte Signal QV1 zurückgesetzt; gleichzeitig wird der Setzeingang S des RS-Flip-Flops RS-FF1 mittels des NOR-Gatters gesperrt, so daß kein Setzen möglich ist, solange das erste zeitverzögerte Signal QV1 HIGH ist.

### Bezugszeichen

- A: Setz-Rücksetzgenerator
- B: Rücksetzgenerator
- C: Setzgenerator
- C1, C4, C5: Kondensatoren
- D, D2, D3, D4: Dioden
- (C1, D): Gleichrichterschaltung
- dt1, dt2: Signalverzögerungsglieder
- FF: (pegelgesteuertes) Flip-Flop
- GDL: Hochdruckgasentladungslampe
- H: H-Brückenschaltung
- K1, K2, K3: Komparatoren
- PWM: Pulsweitenmodulator
- R: Regler
- RDS: Widerstand (des Wandlerschalters Tr)
- R3, R4, R5, R6, R7, R8: Widerstände
- (R, PWM): Steuerelektronik
- R1, R2: Rücksetzeingänge
- RS-FF, RS-FF1: RS-Flip-Flops
- S, S1, S2: Setzeingänge
- T: Wandlertransformator
- TA, TB: steuerbare Schalter
- Tr: Wandlerschalter (Schalttransistor)
- Z: Zündschaltung

- IL: Lampenstrom
- Q: PWM-Signal
- QV1: erstes zeitverzögertes Signal
- QV2: zweites zeitverzögertes Signal
- Ref1, Ref2: Referenzspannungen
- St: Ausgangsgröße
- UB: Betriebsspannung
- UD: Spannung an der Diode D
- UE: Versorgungsspannung des Pulsweitenmodulators
- UW: Lampenspannung
- ΔT1: erste Verzögerungszeit
- ΔT2: zweite Verzögerungszeit

## Patentansprüche

1. Vorschaltgerät für eine Hochdruckgasentladungslampe in einem Kraftfahrzeug
- mit einem Gleichspannungssperrwandler, bestehend aus einem Wandlertransformator (T), einem primärseitigem Wandlerschalter (Schalttransistor Tr) und aus einer sekundärseitigen Gleichrichterschaltung, welche einen Kondensator (C1) und eine Diode (D) aufweist,
- einer dem Gleichspannungssperrwandler nachgeschalteten H-Brückenschaltung (H) und einer Zündschaltung (Z),
- einem Pulsweitenmodulator (PWM), dessen Ausgangssignal am Steuereingang des primärseitigen Wandlerschalters (Tr) anliegt,
- und einem Regler (R), dessen Ausgangsgröße (St) von den Eingangsgrößen Lampenstrom (IL) und Lampenspannung (UW) abhängen,
**dadurch gekennzeichnet, daß**
der Pulsweitenmodulator (PWM) besteht aus
- einem pegelgesteuerten Flip-Flop (FF), dessen Ausgang das PWM-Signal (Q) liefert,
- einem Setzgenerator (C), der das Flip-Flop (FF) setzt, wenn der Wandlertransformator (T) seine Energie übertragen hat,
- einem Rücksetzgenerator (B), der das Flip-Flop (FF) zurücksetzt, wenn der Primärstrom des Wandlertransformators (T) einen vorgegebenen Wert (Steuer) überschreitet,
- einem zeitgesteuerten Setz-Rücksetzgenerator (A), der die Periodendauer und das Puls-Pausen-Verhältnis des PWM-Signals (Q) begrenzt,
- und zwei Signalverzögerungsgliedern (dt1, dt2), welche aus dem PWM-Signal (Q) ein erstes zeitverzögertes Signal (QV1) und ein zweites zeitverzögertes Signal (QV2) erzeugen,
wobei die genannten Baugruppen so verschaltet sind,
- daß das erste zeitverzögerte Signal (QV1) die Setzeingänge (S1) und (S2) des Flip-Flops (FF) sperrt und die Rücksetzeingänge (R1) und (R2) des Flip-Flops (FF) freigibt,
- daß das erste zeitverzögerte Signal (QV1) und das PWM-Signal (Q) AND-verknüpft die Zeitsteuerung des Setz-Rücksetzgenerators (A) initialisieren,
- daß der Setzgenerator (C) ein Signal am Setzeingang (S1) des Flip-Flops (FF) erzeugt, indem er die an der Diode (D) anliegende Spannung (UD) differenziert, den Pegel des differenzierten Signals in ein digitales Signal umwandelt und dessen Wert mit einem RS-Flip-Flop (RS-FF1) speichert, dessen Ausgangsignal das Signal für den Setzeingang (S1) des Flip-Flops (FF) ist,
- daß das erste zeitverzögerte Signal (QV1) das RS-Flip-Flop (RS-FF1) im Setzgenerator (C) zurücksetzt und den Setzeingang (S) des RS-Flip-Flops (RS-FF1) sperrt,
- und daß das zweite zeitverzögerte Signal (QV2) und das PWM-Signal (Q) NAND-verknüpft die Erfassung des primären Wandlerstroms im Rücksetzgenerator (B) aktivieren.

2. Vorschaltgerät nach Anspruch 1, **dadurch gekennzeichnet, daß** der Gleichspannungssperrwandler als CUK-Wandler ausgeführt ist.

## Claims

1. Ballast für eine high-pressure gas discharge lamp in a motor vehicle
- with a d.c. off-state voltage converter, consisting of a converter transformer (T), a converter switch on the primary side (transistor switch Tr) and rectifier circuit on the secondary side containing a capacitor (C1) and a diode (D),
- a H bridge circuit (H) and a firing circuit (Z) downstream of the d.c. off-state voltage converter,
- a pulse width modulator (PWM) whose output signal goes into the control input of the converter switch (Tr) on the primary side,
- and a controller (R) whose output value (St) depends on the input variables, i.e. lamp current (IL) and lamp voltage (UW),
wherein
the pulse width modulator (PWM) consists of
- a level-controlled flip-flop (FF) whose output delivers the PWM signal (Q),
- an actuator generator (C) which actuates the flip-flop (FF) when the converter transformer (T) has transferred its energy,
- a reset generator (B) which resets the flip-flop (FF) when the primary current of the converter transformer (T) exceeds a specified value (control),
- a timer-controlled set-reset generator (A) which limits the on-period and the pulse-to-pause ratio of the PWM signal (Q),
- and two signal delay elements (dt1, dt2) which generate a first delayed signal (QV1) and a second delayed signal (QV2) from the PWM signal (Q),
where the above assemblies are wired such
- that the first delayed signal (QV1) disables the set inputs (S1) and (S2) of the flip-flop (FF) and enables the reset inputs (R1) and (R2) of the flip-flop (FF),
- that the first delayed signal (QV1) and the PWM signal (Q) are AND-linked to initialize the timer control of the set-reset generator (A),
- that the set generator (C) generates a signal at the set input (S1) of the flip-flop (FF) by differentiating the voltage (UD) at the diode (D), converting the level of the differentiated signal into a digital signal and storing its value by means of a RS flip-flop (RS-FF1) whose output signal is the signal for the set input (S1) of the flip-flop (FF),
- that the first delayed signal (QV1) resets the RS flip-flop (RS-FF1) in the set generator (C) and disables the set input (S) of the RS flip-flop (RS-FF1),
- and that the second delayed signal (QV2) and the PWM signal (Q) are NAND-linked to actuate the reading of the primary converter current in the reset generator (B).

2. Lamp ballast as in claim 1, wherein the d.c. off-state voltage converter is designed as a CUK converter.

## Revendications

1. Ballast pour une lampe à décharge à haute pression d'un véhicule à moteur, avec
- un convertisseur continu-continu à oscillateur bloqué, constitué d'un transformateur de convertisseur (T), d'un commutateur de convertisseur côté primaire (transistor de commutation Tr) et, côté secondaire, d'un circuit redresseur qui présente un condensateur (C1) et une diode (D),
- un circuit de pont en H (H), monté en aval du convertisseur continu-continu à oscillateur bloqué, et un circuit d'allumage (Z),
- un modulateur de largeur d'impulsion (PWM) dont le signal de sortie est appliqué à l'entrée de commande du commutateur de convertisseur côté primaire (Tr),
- et un régulateur (R) dont la grandeur de sortie (St) est fonction des grandeurs d'entrée intensité de la lampe (IL) et tension de la lampe (UW),
**caractérisé en ce que**
le modulateur de largeur d'impulsion (PWM) se compose
- d'une bascule bistable commandée par niveau (FF) dont la sortie fournit le signal PWM (Q),
- d'un générateur de positionnement (C) qui positionne la bascule bistable (FF) lorsque le transformateur de convertisseur (T) a transmis son énergie,
- d'un générateur de repositionnement (B) qui repositionne la bascule bistable (FF) lorsque l'intensité primaire du transformateur de convertisseur (T) dépasse une valeur (commande) prédéterminée,
- d'un générateur de positionnement/repositionnement à commande temporelle (A) qui limite la durée de la période et le rapport impulsion/pause du signal PWM (Q),
- et de deux éléments retardateurs de signal (dt1, dt2) qui produisent à partir du signal PWM (Q) un premier signal retardé (QV1) et un deuxième signal retardé (QV2), les modules précités étant câblés de telle sorte que
- le premier signal retardé (QV1) bloque les entrées de positionnement (S1) et (S2) de la bascule bistable (FF) et valide les entrées de repositionnement (R1) et (R2) de la bascule bistable (FF),
- le premier signal retardé (QV1) et le signal PWM (Q) reliés sous la forme d'une fonction ET (AND) initialisent la commande temporelle du générateur de positionnement/repositionnement (A),
- le générateur de positionnement (C) génère un signal à l'entrée de positionnement (S1) de la bascule bistable (FF) en différenciant la tension (UD) présente aux bornes de la diode (D), en convertissant le niveau du signal différencié en un signal numérique et en stockant sa valeur au moyen d'une bascule RS (RS-FF1) dont le signal de sortie est le signal fourni à l'entrée de positionnement (S1) de la bascule bistable (FF),
- le premier signal retardé (QV1) repositionne la bascule RS (RS-FF1) dans le générateur de positionnement (C) et bloque l'entrée de positionnement (S) de la bascule RS (RS-FF1),
- et le deuxième signal retardé (QV2) et le signal PWM (Q) reliés sous la forme d'une fonction NON-ET (NAND) activent la détection du courant primaire du convertisseur dans le générateur de repositionnement (B).

2. Ballast selon la revendication 1, **caractérisé en ce que** le convertisseur continu-continu à oscillateur bloqué est réalisé sous la forme d'un convertisseur de Cuk.
